# EUROPÄISCHE PATENTSCHRIFT

(11) **EP 3 710 717 B1**
(45) Veröffentlichungstag und Bekanntmachung des Hinweises auf die Patenterteilung: **29.09.2021**
(21) Anmeldenummer: 18808213.5
(22) Anmeldetag: 13.11.2018
(51) Int. Cl.: F16D 55/00

(54) **BREMSANORDNUNG FÜR EIN NUTZFAHRZEUG**
BRAKE ARRANGEMENT FOR A UTILITY VEHICLE
ENSEMBLE DE FREINAGE POUR VÉHICULE COMMERCIAL

(30) Priorität: 17.11.2017 DE 102017127120
(43) Veröffentlichungstag der Anmeldung: 23.09.2020
(73) Patentinhaber: BPW Bergische Achsen KG, 51674 Wiehl (DE)
(72) Erfinder: KLAAS, Thomas, 51580 Reichshof (DE); PACK, Peter, 51588 Nümbrecht (DE); LEIDIG, Hans-Josef, 51580 Reichshof (DE)
(74) Vertreter: Christophersen & Partner Partnerschaft mbB Patentanwälte
(86) Internationale Anmeldenummer: PCT/DE2018/100919
(87) Internationale Veröffentlichungsnummer: WO 2019/096351

(56) Entgegenhaltungen:
- EP-A1- 1 715 211
- EP-A1- 3 032 125
- WO-A1-2018/210783
- DE-A1-102005 052 951
- DE-A1-102014 113 369

## Beschreibung

Die Erfindung betrifft eine Bremsanordnung für ein Nutzfahrzeug, mit einem Achselement, das fahrzeugaußen eine Radnabe trägt, deren Drehachse mit der Längsmittelachse des Achselements zusammenfällt, mit einer sowohl achsfeste Elements als auch mit der Radnabe drehbare Elemente umfassenden Trommel- oder Scheibenbremse, wobei Bestandteil der achsfesten Elemente ein die Bremskräfte auf das Achselement übertragender, auf einem Befestigungsabschnitt des Achselements an diesem befestigbarer Bremsträger ist.

Aus der EP 2 767 725 A1 ist eine Bremsanordnung in der Bauart für eine Schwimmsattel-Scheibenbremse bekannt, bei der ein den Bremssattel Lageruder und den inneren Bremsbelag der Scheibenbremse aufnehmender, flach gestalteter Bremsträger mit einem rechteckigen Maul versehen, und mit diesem Maul auf ein ebenfalls rechteckiges Achselement eines Nutzfahrzeug-Achskörpers aufgesetzt ist. In dieser gegenseitigen Position sind Bremsträger und Achselement starr miteinander verschweißt. Aufgrund der Kombination von Rechteckform und Schweißverbindung lassen sich mit dieser Bremsanordnung hohe Bremsmomente übertragen. Allerdings ist diese Bauart, da sie eine zwar dauerhafte, aber praktisch nicht mehr demontierbare Schweißverbindung erfordert, nicht montagefreundlich.

Aus der DE 10 2007 013 670 A1 und der WO 01/42676 A1 sind Bremsanordnungen mit einer montagefreundlichen Verschraubung des Bremsträgers einer Scheibenbremse an einem Achselement einer Fahrzeugachse bekannt. Hierzu ist das Achselement mit einem starr daran befestigten Lochflansch versehen, an den sich der Bremsträger in Achsrichtung ansetzen und mit dem Lochflansch verschrauben lässt. Die der axialen Verschraubung dienenden Lochbilder am Bremsträger und am Lochflansch erlauben eine Montage des Bremsträgers in verschiedenen Positionen. Von Nachteil ist, dass die Verschraubung nicht nur dazu dient, die Bauteile in Achsrichtung miteinander zu verbinden, sondern die Verschraubung auch an der Übertragung der in Achsenumfangsrichtung wirkenden Bremsmomente beteiligt ist.

Dokument EP 1 715 211 A1 offenbart eine Bremsanordnung für ein Nutzfahrzeug, mit einem Flansch, der koaxial zu einem Achselement angeordnet wird.

Dokument EP 3 032 125 A1 offenbart eine Bremsanordnung mit einem Achskörper und einem daran ausgebildeten Grundkörper, der sich koaxial zur Drehachse des Achskörpers erstreckt.

Ziel der Erfindung ist es, eine für die Übertragung hoher Bremsmomente geeignete und modular einsetzbare Bremsanordnung für ein Nutzfahrzeug zu schaffen, welche die Möglichkeit bietet, noch in einem späten Stadium der Achsmontage und selbst im Rahmen der Endmontage je nach Anforderung und Einsatzzweck ganz unterschiedliche Bremsträger mit ein- und demselben Achselement zu kombinieren, und so zu einer maximalen Freiheit im Montageprozess zu gelangen.

Die angestrebte Modulbauweise soll insbesondere die Möglichkeit bieten, an dem Achselement wahlweise den Bremsträger einer Trommelbremse oder den Bremsträger einer Scheibenbremse zu befestigen und so die Entscheidung über entweder eine trommelgebremste oder aber eine scheibengebremste Nutzfahrzeugachse auf einen späten Zeitpunkt im Rahmen des Fertigungs- und Montageprozesses zu verlagern. Trotz der angestrebten Flexibilität sollen durch die Bremsanordnung hohe Bremsmomente übertragbar sein.

Zur Lösung dieser Aufgabenstellung wird eine Bremsanordnung für ein Nutzfahrzeug mit den Merkmalen des Patentanspruchs 1 vorgeschlagen. Bestandteil der Bremsanordnung ist ein Achselement zur Lagerung einer Radnabe, deren Drehachse mit der Längsmittelachse des Achselements zusammenfällt. Bestandteil der Bremsenordnung ist ferner eine sowohl achsfeste Elemente als auch mit der Radnabe drehbare Elemente umfassende Trommel- oder Scheibenbremse, wobei Bestandteil der achsfesten Elemente ein die Bremskräfte auf das Achselement übertragender und auf einem Befestigungsabschnitt des Achselements an diesem montierbarer Bremsträger ist. Auf dem Befestigungsabschnitt besteht das Achselement materialeinheitlich
- aus einem auf der Längsmittelachse angeordneten Grundkörper,
- aus ersten und zweiten Konsolen, welcher auf einander abgewandten Seiten des Grundkörpers von diesem nach außen abstehen.

Für die Abstützung des Bremsträgers ist an jeder der beiden Konsolen eine Befestigungsfläche mit einer Flächennormalen tangential zur Längsmittelachse und parallel zu der Flächennormalen einer Befestigungsfläche an der anderen Konsole ausgebildet.

Eine solche Bremsanordnung verwendet ausschließlich Befestigungs- bzw. Verbindungsflächen, die sich primär in Längsrichtung des Achselements erstrecken. Die Bremsanordnung ist dadurch besonders geeignet für einen modularen Herstellungsprozess und bietet ein hohes Maß an Flexibilität selbst noch während der Endmontage einer Nutzfahrzeugachse. Mit ein- und demselben Achselement lassen sich unterschiedliche Bremsentypen und unterschiedliche Bremsengrößen kombinieren, wobei der modulare Aufbau die Wahl zulässt, bei der Endmontage entweder eine Trommelbremse oder eine Scheibenbremse lösbar an dem vorbereiteten Achselement zu montieren.

Die erzielte Flexibilität geht nicht zu Lasten der Fähigkeit, hohe Bremsmomente von dem Bremsträger auf das Achselement zu übertragen. Vielmehr bieten die von dem Grundkörper des Achselements auf einander abgewandten Seiten nach außen abstehenden ersten und zweiten Konsolen mit den an ihnen vorhandenen Befestigungsflächen die Voraussetzung dafür, hohe Bremskräfte bzw. Bremsmomente auf das Achselement der Fahrzeugachse zu übertragen. Die Kraftübertragung ist dabei dergestalt, dass etwaige Schrauben oder andere Verbindungselemente, welche den Bremsträger an dem Achselement sichern können, weitgehend von Bremskräften und Bremsmomenten entlastet sind. Stattdessen werden die Kräfte von dem Bremsträger vor allem in einer tangentialen Richtung und damit in Richtung der tatsächlich wirkenden Reibmomente der Fahrzeugbremse auf die Konsolen übertragen, die wiederum starr an dem Achselement angeordnet sind.

Vorteilhafte Ausgestaltungen der Bremsanordnung sind in den Unteransprüchen angegeben.

Jede Konsole ist mit mindestens einer in der Befestigungsfläche mündenden Bohrung versehen, deren Achse rechtwinklig zu der Befestigungsfläche verläuft. Für eine nochmals verbesserte, vor allem verkantungsfreie Verbindung ist jede Konsole vorzugsweise mit zwei solcher Bohrungen versehen, wobei die zwei Bohrungen in Längsrichtung des Achselements hintereinander angeordnet sind.

Für die Befestigung eines Bremsträgers einer Trommelbremse oder einer Scheibenbremse kann es bereits ausreichen, wenn an den beiden Konsolen jeweils eine Befestigungsfläche ausgebildet ist. Bevorzugt wird jedoch eine Ausgestaltung, bei der jede Konsole auf der der Befestigungsfläche abgewandten Seite eine weitere, zweite Befestigungsfläche aufweist. Die zweite Befestigungsfläche ist in diesem Fall parallel zu der ersten Befestigungsfläche angeordnet.

Gemäß einer bevorzugten Ausgestaltung erstrecken sich die Flächennormalen der ersten Befestigungsflächen parallel zueinander in eine gemeinsame Richtung, und ebenso erstrecken sich die Flächennormalen der zweiten Befestigungsflächen parallel zueinander in eine gemeinsame Richtung. Dabei können die ersten Befestigungsflächen und die zweiten Befestigungsflächen jeweils in einer gemeinsamen Ebene liegen, wobei die Ebenen zueinander parallele Ebenen sind.

Jede Konsole kann mit einer und vorzugsweise mit zwei sich rechtwinklig zwischen der ersten und der zweiten Befestigungsfläche erstreckenden Bohrung bzw. Bohrungen versehen sein. Sofern jede Konsole mit zwei Bohrungen versehen ist, sind diese Bohrungen in Längsrichtung des Achselements hintereinander angeordnet.

Die Bohrungen können zu Befestigungszwecken Gewindebohrungen sein. Bevorzugt wird jedoch, dass die Bohrungen zylindrische, gewindelose Durchgangsbohrungen sind.

Das Achselement ist auf dem Befestigungsabschnitt als ein den Grundkörper und die Konsolen umfassender Schmiedekörper ausgebildet, an dem die Befestigungsflächen und Bohrungen durch auf den Schmiedeprozess folgende Bearbeitungen gefertigt sind.

Bei der erfindungsgemäßen Bremsanordnung ist, im Fall der Bauart als Scheibenbremse, an dem Bremsträger mindestens ein Belagschacht zur Aufnahme und zum Abstützen des Bremsbelags der Scheibenbremse sowie ein erster und ein zweiter Stützfuß ausgebildet. Der erste Stützfuß ist an der Befestigungsfläche der ersten Konsole, und der zweite Stützfuß ist an der Befestigungsfläche der zweiten Konsole abgestützt.

Bei der erfindungsgemäßen Bremsanordnung ist, im Fall der Bauart als Trommelbremse, an dem Bremsträger ein einfach oder doppelt vorhandener Lagerzapfen zum schwenkbaren Abstützen der beiden Bremsbacken der Trommelbremse, sowie ein erster und zweiter Stützfuß ausgebildet. Der erste Stützfuß ist an der Befestigungsfläche der ersten Konsole, und der zweite Stützfuß ist an der Befestigungsfläche der zweiten Konsole abgestützt.

Im Fall der Bauart als Trommelbremse ist eine weitere Ausgestaltung der Bremsanordnung gekennzeichnet durch einen weiteren Träger mit einem ersten weiteren Stützfuß und einem zweiten weiteren Stützfuß. Der erste weitere Stützfuß ist an der zweiten Befestigungsfläche der ersten Konsole, und der zweite weitere Stützfuß ist an der zweiten Befestigungsfläche der zweiten Konsole abgestützt.

Im Folgenden werden Ausführungsbeispiele der Erfindung anhand der Zeichnungen erläutert, und es werden weitere Einzelheiten und Vorteile angegeben. Es zeigen:
- Figur 1: in perspektivischer Darstellung eine fertig montierte Bremsanordnung für ein Nutzfahrzeug, wobei diese der Anbindung einer Trommelbremse an ein Achselement einer Nutzfahrzeugachse dient;
- Figur 2: einen Querschnitt durch das Achselement im Bereich der Verbindung mit dem Bremsträger, wobei der Bremsträger selbst nicht dargestellt ist;
- Figur 3: die Gegenstände nach Figur 1 vor deren Montage;
- Figur 4: ein anderes Ausführungsbeispiel der Bremsanordnung für ein Nutzfahrzeug, wobei diese der Anbindung einer Scheibenbremse an ein Achselement einer Nutzfahrzeugachse dient;
- Figur 5A: die Gegenstände nach Figur 4 in einer Seitenansicht, und
- Figur 5B: eine im Vergleich zu Figur 5A andere Anordnung desselben Bremsträgers an demselben Achselement wie in Figur 5A.

Die hier beschriebene Bremsanordnung findet Anwendung an der Fahrzeugachse eines Nutzfahrzeuges und vorzugsweise an einer starren Fahrzeugachse mit einem langgestreckten Achskörper 3, der an beiden Enden mit Achsschenkeln 2 zur Lagerung der Radnaben und der Räder des Fahrzeugs versehen ist.

Die Nutzfahrzeugachse ist ferner im Bereich jeder Radnabe mit einer Fahrzeugbremse versehen. Die Fahrzeugbremse kann entweder eine Trommelbremse sein, bei welcher zwei an einem achsfesten Bremsträger gelagerte Bremsbacken an ihren anderen Enden nach außen gegen die Bremstrommel gespreizt werden, oder eine Scheibenbremse, bei welcher zwei Bremsbeläge gegen eine zwischen ihnen angeordnete, mit der Radnabe rotierende Bremsscheibe gepresst werden. Der eigentliche Betätigungsmechanismus für die Trommel- oder Scheibenbremse ist beliebig, jedoch ist bei schweren Nutzfahrzeugachsen eine pneumatische Betätigung der Bremse mittels eines an dem Achselement oder eines an dem Bremssattel der Scheibenbremse befestigten Druckluftzylinders üblich.

Üblich ist, das technische Design einer Nutzfahrzeugachse im vornhinein auf den jeweiligen Bremsentyp (Trommel- bzw. Scheibenbremse) abzustimmen, und umgekehrt. Es ist dann praktisch nicht möglich, sich nach der Fertigstellung des Achselements für einen anderen Bremsentyp oder auch nur für eine andere Bremsengröße zu entscheiden, da dann die Anschlüsse nicht zueinander passen.

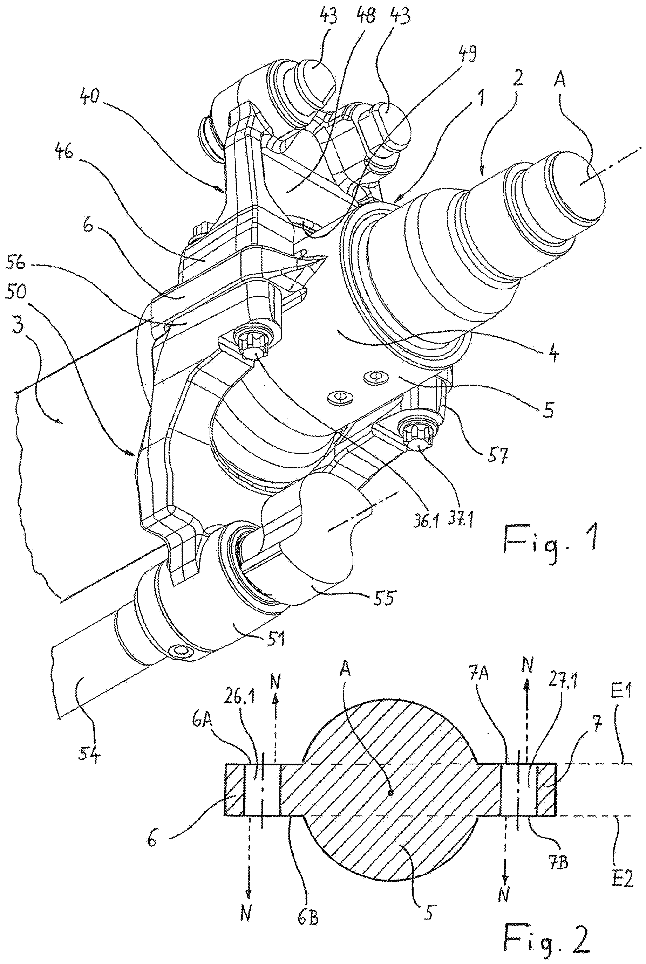

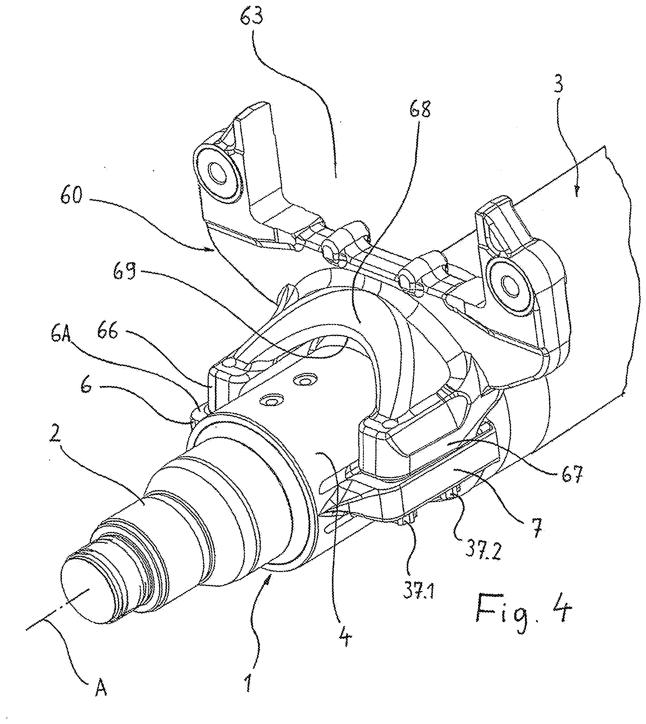

Die im Folgenden beschriebene Bremsanordnung ermöglicht hier eine sehr viel größere Flexibilität. Insbesondere ist die Flexibilität so groß, dass selbst noch bei der abschließenden Montage, bei der das Achselement bereits fertig produziert vorliegt, über die für den jeweiligen Einsatzzweck am besten geeignete Bremse entschieden werden kann, und diese dann montierbar ist. Erreicht wird dies durch eine modulare Gestaltung einerseits des Achselements 1 der Fahrzeugachse, und andererseits des Bremsträgers, der seinerseits entweder der Bremsträger 40 (Fig. 1) einer Trommelbremse, oder der Bremsträger 60 (Fig. 4) einer Scheibenbremse sein kann.

Allgemein ist als der Bremsträger 40, 60 jenes Element einer Trommel- bzw. Scheibenbremse zu verstehen, welches achsfest angeordnet ist. Entsprechend ihrer jeweiligen Funktionsweise sind Trommelbremsen und Scheibenbremsen außerdem mit drehbeweglichen Teilen versehen, welche mit der Radnabe rotieren, z. B. im Fall der Bremstrommel die Bremstrommel, und im Fall der Scheibenbremse die Bremsscheibe.

Die als Starrachse ausgebildete Fahrzeugachse besteht aus einem Achsrohr 3 von rundem oder quadratischem Querschnitt, an dessen beiden Enden die Achselemente 1 befestigt sind. Bestandteil jedes Achselements 1 ist ein Befestigungsabschnitt 4 und außen der Achsschenkel 2, auf dem mittels entsprechender Wälzlager die Radnabe des Fahrzeugs und die Bremstrommel oder die Bremsscheibe drehbar gelagert ist. Zwischen dem Achsschenkel 2 und dem Achsrohr 3 befindet sich, auf derselben Längsmittelachse A, der Befestigungsabschnitt 4. Dieser dient dem Anschluss der achsfesten Elemente der Bremse, also z.B. dem Anschluss des Bremsträgers 40 der Trommelbremse.

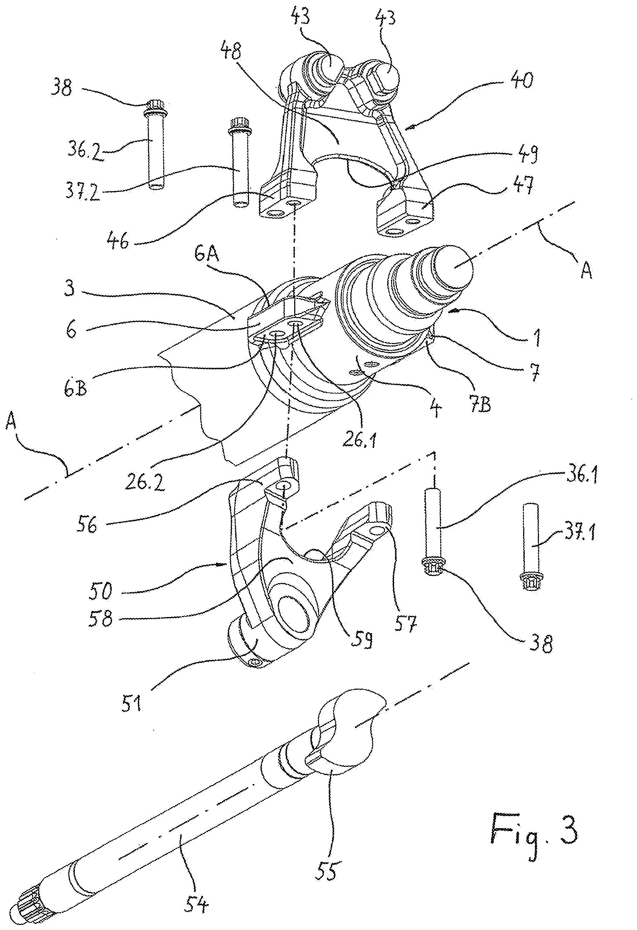

An dem Bremsträger 40 der Trommelbremse sind ein oder zwei Lagerzapfen 43 zum schwenkbaren Abstützen der beiden Bremsbacken der Trommelbremse ausgebildet. Gemäß Figur 3 sind an dem Bremsträger 40 ferner ein erster Stützfuß 46 und ein zweiter Stützfuß 47 ausgebildet, mit denen der Bremsträger 40 an dem Achselement 1 abgestützt ist.

Für die Abstützung des Bremsträgers 40 oder wahlweise eines anderen Bremsträgers, z.B. des Bremsträgers 60 einer Scheibenbremse (Fig. 4), besteht das Achselement auf dem Befestigungsabschnitt 4 aus einem auf der Längsmittelachse A des Achsschenkels 2 angeordneten, primär zylindrischen Grundkörper 5 sowie aus zwei und auch nur zwei Konsolen 6, 7, welche einstückig, d.h. materialeinheitlich, an dem Grundkörper 5 angeformt sind.

Hierzu zeigt Fig. 2 einen Querschnitt durch den Grundkörper 5 sowie die zwei flügelartig von dem Grundkörper 5 nach außen abstehenden Konsolen 6, 7.

Das Achselement ist auf dem Befestigungsabschnitt 4 als ein den massiven Grundkörper 5 und die davon abstehenden Konsolen 6, 7 umfassendes Schmiedebauteil ausgebildet. Dieses wird zu seiner Formgebung z.B. in einem Gesenk geschmiedet, was zu einer hohen Festigkeit und Zähigkeit des Bauteils führt.

Nach dem Schmiedeprozess werden an dem Schmiedebauteil vier Befestigungsflächen 6A, 6B, 7A, 7B bearbeitet, z.B. durch Fräsen oder Schleifen dieser Flächen.

Mittels entsprechender Bohrwerkzeuge werden zwei Bohrungen 26.1, 26.2 in der Konsole 6 und zwei Bohrungen 27.1, 27.2 in der Konsole 7 ausgebildet.

Das Achselement 1 wird mit dem Achsrohr 3 so verbunden, dass zumindest der Achsschenkel 2 und der Grundkörper 5 des Befestigungsabschnitts 4 auf einer gemeinsamen Längsmittelachse A angeordnet sind.

Gemäß Fig. 2 sind die beiden Konsolen 6, 7 auf einander abgewandten Umfangsabschnitten des primär zylindrischen Grundkörpers 5 angeordnet. An der in Fig. 2 links wiedergegebenen, ersten Konsole 6 befindet sich eine erste Befestigungsfläche 6A und, dieser abgewandt, eine zweite Befestigungsfläche 6B. Ebenso befindet sich an der in Fig. 2 rechts wiedergegebenen zweiten Konsole 7 eine erste Befestigungsfläche 7A und, dieser Fläche abgewandt, eine zweite Befestigungsfläche 7B. Die vier Befestigungsflächen 6A, 6B, 7A, 7B sind vorzugsweise plan bearbeitet.

Die Befestigungsflächen 6A, 6B, 7A, 7B haben jeweils eine größere Ausdehnung in Längsrichtung als in Radialrichtung des Achselements 1. Vorzugsweise beträgt die Ausdehnung in Längsrichtung das Zweifache bis Sechsfache der radialen Ausdehnung.

Die beiden Befestigungsflächen 6A, 6B der ersten Konsole 6 erstrecken sich parallel zueinander. Ebenso erstrecken sich die beiden Befestigungsflächen 7A, 7B der zweiten Konsole 7 parallel zueinander.

Bei dem Ausführungsbeispiel erstrecken sich, wie in Fig. 2 wiedergegeben, die beiden ersten Befestigungsflächen 6A, 7A in einer gemeinsame Ebene E1, und ebenso erstrecken sich die beiden zweiten Befestigungsflächen 6B, 7B in einer gemeinsamen Ebene E2. Die Ebenen E1 und E2 sind zueinander parallele Ebenen. Deren Abstand zueinander beträgt vorzugsweise zwischen 15 % und 35 % des Durchmessers des zylindrischen Grundkörpers 5.

Beim Ausführungsbeispiel verlaufen, wegen der Parallelität aller vier Befestigungsflächen 6A, 6B, 7A, 7B, die auf diesen Flächen jeweils senkrecht stehenden Flächennormalen N tangential in Bezug auf die zentrale Längsmittelachse A des Achselements 1. Die Flächennormalen N der Befestigungsflächen 6A und 7A liegen parallel zueinander, und weisen in dieselbe Richtung. Ebenso liegen die Flächennormalen N der Befestigungsflächen 6B und 7B parallel zueinander, und weisen in dieselbe Richtung.

Allgemein betrachtet, ist an jeder der Konsolen (z. B. an Konsole 6) zur Abstützung des Bremsträgers eine Befestigungsfläche (z. B. 6A) mit einer Flächennormalen N tangential zu der Längsmittelachse A und parallel zu der Flächennormalen N einer an der anderen Konsole 7 vorhandenen Befestigungsfläche (z. B. 7A oder 7B) ausgebildet.

Die erste Konsole 6 ist mit den zwei Bohrungen 26.1, 26.2 versehen, die sich jeweils rechtwinklig zwischen den Befestigungsflächen 6A, 6B der Konsole erstrecken und in Längsrichtung des Achselements 1 hintereinander angeordnet sind. Analog ist die zweite Konsole 7 mit den zwei Bohrungen 27.1, 27.2 versehen, die sich jeweils rechtwinklig zwischen den Befestigungsflächen 7A, 7B der Konsole erstrecken und in Längsrichtung des Achselements 1 hintereinander angeordnet sind.

Durch die Bohrungen 26.1, 26.2, 27.1, 27.2 führt jeweils eine Schraube 36.1, 36.2, 37.1, 37.2 hindurch. Mit den Schrauben ist der Bremsträger 40, 60 oder ein anderes achsfestes Bauteil der Bremse lösbar an dem Achselement 1 befestigt.

Gemäß Fig. 3 ist der Bremsträger 40 zum Zwecke seiner Befestigung mit einem ersten Stützfuß 46 und einem zweiten Stützfuß 47 versehen. Beide Stützfüße 46, 47 sind mit einer plan bearbeiteten Unterseite versehen, mit der sie gegen die erste Befestigungsfläche 6A der Konsole 6 bzw. gegen die erste Befestigungsfläche 7A der Konsole 7 abgestützt sind.

Ein direkter Kontakt zwischen dem Bremsträger 40 und dem Achselement 1 besteht auch nur an den Konsolen bzw. den Stützfüßen. Zwar ist der Bremsträger 40 zwischen den Stützfüßen 46, 47 mit einem Brückenabschnitt 48 versehen. Im Bereich des Brückenabschnitts 48 besteht jedoch kein Kontakt zwischen dem Bremsträger 40 und Achsschenkel 1. Vielmehr befindet sich zwischen der dem Achselement 1 zugewandten Innenseite 49 des Brückenabschnitts 48 und der Außenseite des primär zylindrischen Grundkörpers 5 ein radialer Freiraum.

Die Konsolen 6, 7 dienen nicht nur der Befestigung des Bremsträgers 40, sondern zugleich der Befestigung eines weiteren Trägers 50, der ebenfalls ein achsfestes Element der Trommelbremse ist. Bei der hier wiedergegebenen Ausführungsform dient der Träger 50 mittels eines daran ausgebildeten Auges 51 der Drehlagerung einer Welle 54, die an ihrem Ende den Spreiznocken 55 trägt, welcher beim Bremsen die beiden Bremsbacken der Trommelbremse voneinander weg spreizt.

Auch der weitere Träger 50 verfügt über einen ersten Stützfuß 56, einen zweiten Stützfuß 57 und einen die Stützfüße 56, 57 verbindenden, das Auge 51 tragenden Brückenabschnitt 58. Die Unterseiten der Stützfüße 56, 57 sind plan bearbeitet. Der Stützfuß 56 liegt an der zweiten Befestigungsfläche 6B der Konsole 6, und der Stützfuß 57 an der zweiten Befestigungsfläche 7B der Konsole 7 an.

Insgesamt stütz sich daher der Bremsträger 40 der Trommelbremse von der einen Seite her gegen die flügelförmigen Konsolen 6, 7 ab, wohingegen sich der weitere Träger 50 von der anderen Seite her gegen die Konsolen 6, 7 abstützt.

Auch der Träger 50 steht ausschließlich mit seinen Stützfüßen 56, 57 in Kontakt zu dem Achselement 1. Hingegen befindet sich zwischen der dem Achselement 1 zugewandten Innenseite 59 des Brückenabschnitts 58 und der Außenseite des primär zylindrischen Grundkörpers 5 ein radialer Freiraum.

Der Bremsträger 40 und der weitere Träger 50 sind mit den insgesamt vier Schrauben 36.1, 36.2, 37.1, 37.2 an den beiden Konsolen 6, 7 befestigt. Dabei sind die beiden ersten Stützfüße 46 und 56 durch zwei Schrauben miteinander verbunden, welche, vorzugsweise mit ihrem gewindelosen Schaftabschnitt, durch die Bohrungen 26.1, 26.2 der ersten Konsole 6 führen. Die beiden zweiten Stützfüße 47 und 57 sind durch zwei Schrauben miteinander verbunden, welche, vorzugsweise mit ihrem gewindelosen Schaftabschnitt, durch die Bohrungen 27.1, 27.2 der zweiten Konsole 7 führen. Die Schrauben weisen daher jeweils einen Gewindeabschnitt, einen Schaftabschnitt und einen Schraubenkopf 38 auf.

Die Schrauben sind bei der Ausführungsform nach den Figuren 1 bis 3 aus entgegengesetzten Richtungen eingeführt. Das Einführen ist für die Schraube 36.1 anhand einer strickpunktierten Linie dargestellt. Diese Schraube 36.1 stützt sich mit ihrem Schraubenkopf 38 an dem Stützfuß 56 des weiteren Trägers 50 ab, durchdringt die Bohrung 26.1 der ersten Konsole 6, und greift mit ihrem Gewindeabschnitt in ein Gewinde im Stützfuß 46 des Bremsträgers 40.

Die andere, ebenfalls der Befestigung an der ersten Konsole 6 dienende Schraube 36.2 hingegen stützt sich mit ihrem Schraubenkopf 38 an dem Stützfuß 46 des Bremsträgers 40 ab, durchdringt die zweite Bohrung 26.2 der Konsole 6, und greift mit ihrem Gewindeabschnitt in ein Gewinde im Stützfuß 56 des weiteren Trägers 50.

Analog erfolgt mit den beiden anderen Schrauben 37.1 und 37.2 die Befestigung der zweiten Stützfüße 47 und 57 an der zweiten Konsole 7.

Durch die wechselseitige Verschraubung kommt es zu einem Versatz in axialer Richtung des Brückenabschnitts 48 zu dem weiteren Brückenabschnitt 58. Dadurch wiederum kann ein Versatz der an dem Bremsträger 40 einerseits und dem weiteren Träger 50 andererseits ausgebildeten Funktionselemente in axialer Richtung erreicht werden. Denn beim Ausführungsbeispiel sind die Lagerzapfen 43 des Bremsträgers 40 in Richtung der Längsmittelachse A versetzt angeordnet zu dem Auge 51, welches die Lagerung der mit dem Spreiznocken 55 versehenen Welle 54 trägt.

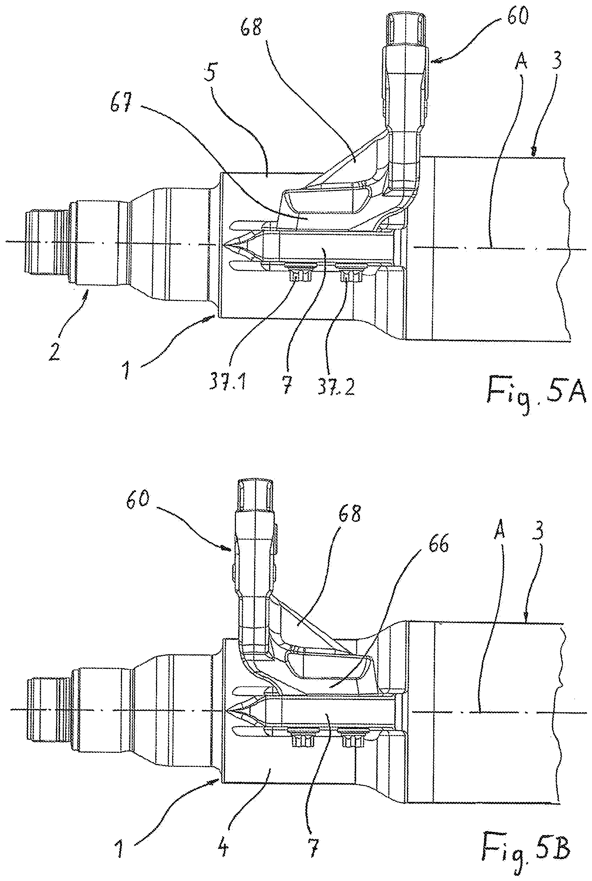

In den Figuren 4, 5A und 5B ist eine Ausführungsform der Bremsanordnung in Verbindung mit einer Scheibenbremse wiedergegeben.

Der Bremsträger 60 der Scheibenbremse weist einen Belagschacht 63 zur Aufnahme und zum Abstützen des fahrzeuginnen angeordneten Bremsbelags der Scheibenbremse auf. An dem Bremsträger sind einstückig ein erster Stützfuß 66 und zweiter Stützfuß 67 ausgebildet. Der erste Stützfuß 66 ist mit seiner plan bearbeiteten Unterseite an der Befestigungsfläche 6A der ersten Konsole 6, und der zweite Stützfuß 67 ist analog an der Befestigungsfläche 7A der zweiten Konsole 7 abgestützt.

Zwischen den Stützfüßen 66, 67 weist der Bremsträger 60 einen Brückenabschnitt 68 auf. Der Brückenabschnitt 68 selbst ist ohne Kontakt zu dem Achselement 1, indem sich zwischen der dem Achselement 1 zugewandten Innenseite 69 des Brückenabschnitts 68 und der Außenseite des primär zylindrischen Grundkörpers 5 ein radialer Freiraum befindet.

Die Befestigung des Bremsträgers 60 erfolgt mit den vier Schrauben 36.1, 36.2, 37.1, 37.2. Die Schrauben 36.1 und 36.2 befestigen den ersten Stützfuß 66 an der ersten Konsole 6.

Analog befestigen die Schrauben 37.1 und 37.2 den zweiten Stützfuß 67 an der zweiten Konsole 7.

Alle Schrauben sind in diesem Fall gleichsinnig angeordnet, wobei sie sich jeweils mit ihrem Schraubenkopf gegen jene Befestigungsflächen 6B und 7B der Konsolen abstützen, an denen die Stützfüße 66, 67 nicht anliegen. Die Schrauben führen durch die vier Bohrungen in den Konsolen 6, 7 hindurch, und greifen mit ihren Gewindeabschnitten in entsprechende Gewindebohrungen in den Stützfüßen 66, 67. Hierzu sind der erste Stützfuß 66 und der zweite Stützfuß 67 an ihrer Unterseite mit jeweils zwei Gewindebohrungen oder Gewindesacklöchern versehen.

In Fig. 5B ist wiedergegeben, dass die Stützfüße 66, 67 auch anders herum an den Konsolen 6, 7 befestigbar sind. Dadurch gelangt der Belagschacht 63 in eine Ebene, die in Achslängsrichtung zu der Ebene versetzt ist, in der sich der Belagschacht 63 in Fig. 5A befindet. Auf einfache, flexible und montagefreundliche Art wird es also möglich, ein- und dieselbe Scheibenbremse in zwei unterschiedlichen Längspositionen an dem Achselement 1 zu befestigen.

### Bezugszeichenliste

- 1: Achselement
- 2: Achsschenkel
- 3: Achsrohr
- 4: Befestigungsabschnitt
- 5: Grundkörper
- 6: erste Konsole
- 6A: erste Befestigungsfläche
- 6B: zweite Befestigungsfläche
- 7: zweite Konsole
- 7A: erste Befestigungsfläche
- 7B: zweite Befestigungsfläche
- 26.1: Bohrung
- 26.2: Bohrung
- 27.1: Bohrung
- 27.2: Bohrung
- 36.1: Schraube
- 36.2: Schraube
- 37.1: Schraube
- 37.2: Schraube
- 38: Schraubenkopf
- 40: Bremsträger
- 43: Lagerzapfen
- 46: erster Stützfuß
- 47: zweiter Stützfuß
- 48: Brückenabschnitt
- 49: Innenseite
- 50: Träger
- 51: Auge
- 54: Welle
- 55: Spreiznocken
- 56: erster weiterer Stützfuß
- 57: zweiter weiterer Stützfuß
- 58: Brückenabschnitt
- 59: Innenseite
- 60: Bremsträger
- 63: Belagschacht
- 66: erster Stützfuß
- 67: zweiter Stützfuß
- 68: Brückenabschnitt
- 69: Innenseite

- A: Längsmittelachse
- E1: Ebene
- E2: Ebene
- N: Flächennormale

## Patentansprüche

1. Bremsanordnung für ein Nutzfahrzeug, mit einem Achselement (1) zur Lagerung einer Radnabe, deren Drehachse mit der Längsmittelachse (A) des Achselements (1) zusammenfällt, und mit einer sowohl achsfeste Elemente als auch mit der Radnabe drehbare Elemente umfassenden Trommel- oder Scheibenbremse, wobei Bestandteil der achsfesten Elemente ein die Bremskräfte auf das Achselement (1) übertragender und auf einem Befestigungsabschnitt (4) des Achselements (1) montierter Bremsträger (40, 60) ist, wobei das Achselement (1) auf dem Befestigungsabschnitt (4)
- aus einem auf der Längsmittelachse (A) angeordneten Grundkörper (5)
- und aus ersten und zweiten Konsolen (6, 7), welche auf einander abgewandten Seiten des Grundkörpers (5) von diesem nach außen abstehen,
besteht, wobei an jeder der beiden Konsolen (6; 7) zur Abstützung des Bremsträgers (40, 60) mindestens eine Befestigungsfläche (6A, 6B; 7A, 7B) mit einer Flächennormalen (N) tangential zu der Längsmittelachse (A) und parallel zu der Flächennormalen (N) einer Befestigungsfläche an der anderen Konsole (7; 6) ausgebildet ist, wobei jede Konsole (6, 7) mit mindestens einer in der Befestigungsfläche (6A, 6B; 7A, 7B) mündenden Bohrung (26.1, 26.2; 27.1, 27.2) versehen ist, deren Achse rechtwinklig zu der Befestigungsfläche verläuft, **dadurch gekennzeichnet, dass** das Achselement (1) auf dem Befestigungsabschnitt (4) als ein den Grundkörper (5) und die Konsolen (6, 7) umfassender Schmiedekörper ausgebildet ist, an dem die Befestigungsflächen (6A, 6B, 7A, 7B) und die Bohrungen (26.1, 26.2, 27.1, 27.2) durch auf den Schmiedeprozess folgende Bearbeitungen gefertigt sind.

2. Bremsanordnung nach Anspruch 1, **dadurch gekennzeichnet, dass** jede Konsole (6, 7) mit zwei der Bohrungen (26.1 und 26.2; 27.1 und 27.2) versehen ist, wobei die zwei Bohrungen in Längsrichtung des Achselements (1) hintereinander angeordnet sind.

3. Bremsanordnung nach Anspruch 1 oder 2, **dadurch gekennzeichnet, dass** die Bohrungen (26.1, 26.2, 27.1, 27.2) zylindrische, gewindelose Bohrungen sind.

4. Bremsanordnung nach einem der vorangehenden Ansprüche, **dadurch gekennzeichnet, dass** jede Konsole (6, 7) auf der der Befestigungsfläche (6A, 7A) abgewandten Seite eine zweite Befestigungsfläche (6B, 7B) parallel zu der ersten Befestigungsfläche (6A, 7A) aufweist.

5. Bremsanordnung nach Anspruch 4, **dadurch gekennzeichnet, dass** sich die Flächennormalen (N) der ersten Befestigungsflächen (6A, 7A) parallel zueinander in eine gemeinsame Richtung erstrecken, und das sich die Flächennormalen (N) der zweiten Befestigungsflächen (6B, 7B) parallel zueinander in eine gemeinsame, entgegengesetzte Richtung erstrecken.

6. Bremsanordnung nach Anspruch 5, **dadurch gekennzeichnet, dass** die ersten Befestigungsflächen (6A, 7A) und die zweiten Befestigungsflächen (6B, 7B) jeweils in einer gemeinsamen Ebene liegen, wobei die Ebenen (E1, E2) zueinander parallele Ebenen sind.

7. Bremsanordnung nach einem der Ansprüche 4 bis 6, **dadurch gekennzeichnet, dass** jede Konsole (6, 7) mit mindestens einer sich rechtwinklig zwischen der ersten (6A, 7A) und der zweiten (6B, 7B) Befestigungsfläche erstreckenden Bohrung (26.1, 26.2, 27.1, 27.2) versehen ist.

8. Bremsanordnung nach Anspruch 7, **dadurch gekennzeichnet, dass** jede Konsole (6; 7) mit zwei Bohrungen (26.1, 26.2; 27.1, 27.2) versehen ist, wobei die zwei Bohrungen in Längsrichtung des Achselements (1) hintereinander angeordnet sind.

9. Bremsanordnung nach einem der Ansprüche 1 bis 8, **dadurch gekennzeichnet, dass** an dem Bremsträger (60) mindestens ein Belagschacht (63) zur Aufnahme und zum Abstützen des Bremsbelags einer Scheibenbremse sowie ein erster (66) und ein zweiter (67) Stützfuß ausgebildet sind, und dass der erste Stützfuß (66) an der Befestigungsfläche (6A) der ersten Konsole (6), und der zweite Stützfuß (67) an der Befestigungsfläche (7A) der zweiten Konsole (7) abgestützt ist.

10. Bremsanordnung nach Anspruch 9, **dadurch gekennzeichnet, dass** der Bremsträger (60) zwischen den Stützfüssen (66, 67) einen Brückenabschnitt (68) aufweist, und dass sich zwischen der dem Achselement (1) zugewandten Innenseite (69) des Brückenabschnitts (68) und der Außenseite des Grundkörpers (5) ein radialer Freiraum befindet.

11. Bremsanordnung nach Anspruch 9 oder 10; **dadurch gekennzeichnet, dass** der erste Stützfuß (66) mittels erster Schrauben (36.1, 36.2) an der Befestigungsfläche (6A) der ersten Konsole (6), und dass der zweite Stützfuß (67) mittels zweiter Schrauben (37.1, 37.2) an der Befestigungsfläche (7A) der zweiten Konsole (7) abgestützt ist, wobei die ersten Schrauben (36.1, 36.2) und die zweiten Schrauben (37.1, 37.2) jeweils in Längsrichtung des Achselements (1) hintereinander angeordnet sind.

12. Bremsanordnung nach Anspruch 11, **dadurch gekennzeichnet, dass** sämtliche ersten und zweiten Schrauben im gleichen Abstand zu der Längsmittelachse (A) des Achselements (1) angeordnet sind.

13. Bremsanordnung nach einem der Ansprüche 1 bis 8, **dadurch gekennzeichnet, dass** an dem Bremsträger (40) ein oder zwei Lagerzapfen (43) zum schwenkbaren Abstützen der beiden Bremsbacken einer Trommelbremse sowie ein erster (46) und ein zweiter (47) Stützfuß ausgebildet sind, und dass der erste Stützfuß (46) an der Befestigungsfläche (6A) der ersten Konsole (6), und der zweite Stützfuß (47) an der Befestigungsfläche (7A) der zweiten Konsole (7) abgestützt ist.

14. Bremsanordnung nach Anspruch 13, **dadurch gekennzeichnet, dass** der Bremsträger (40) zwischen den Stützfüßen (46, 47) einen Brückenabschnitt (48) aufweist, und dass sich zwischen der dem Achselement (1) zugewandten Innenseite (49) des Brückenabschnitts (48) und der Außenseite des Grundkörpers (5) ein radialer Freiraum befindet.

15. Bremsanordnung nach Anspruch 13 oder 14 in Verbindung mit Anspruch 4, **gekennzeichnet durch** einen weiteren Träger (50) mit einem ersten weiteren Stützfuß (56) und einem zweiten weiteren Stützfuß (57), wobei der erste weitere Stützfuß (56) an der zweiten Befestigungsfläche (6B) der ersten Konsole (6), und der zweite weitere Stützfuß (57) an der zweiten Befestigungsfläche (7B) der zweiten Konsole (7) abgestützt ist.

16. Bremsanordnung nach Anspruch 15, **dadurch gekennzeichnet, dass** der weitere Träger (50) zwischen den Stützfüßen (56, 57) einen Brückenabschnitt (58) aufweist, und dass sich zwischen der dem Achselement (1) zugewandte Innenseite (59) des Brückenabschnitts (58) und der Außenseite des Grundkörpers (5) ein radialer Freiraum befindet.

17. Bremsanordnung nach Anspruch 15 oder 16, **dadurch gekennzeichnet, dass** der erste Stützfuß (46) und der erste weitere Stützfuß (56) mittels Schrauben (36.1, 36.2), welche durch Bohrungen (26.1, 26.2) in der ersten Konsole (6) hindurchgeführt sind, an den einander abgewandtem Befestigungsflächen (6A, 6B) der ersten Konsole (6) abgestützt sind, und dass der zweite Stützfuß (47) und der zweite weitere Stützfuß (57) mittels Schrauben (37.1, 37.2), welche durch Bohrungen (27.1, 27.2) in der zweiten Konsole (7) hindurchgeführt sind, an den einander abgewandten Befestigungsflächen (7A, 7B) der zweiten Konsole (7) abgestützt sind.

18. Bremsanordnung nach Anspruch 17, **dadurch gekennzeichnet, dass** eine Schraube (36.2) mit ihrem Schraubenkopf an dem ersten Stützfuß (46) des Bremsträgers (40), und eine andere Schraube (36.1) mit ihrem Schraubenkopf an dem ersten Stützfuß (56) des weiteren Trägers (50) abgestützt ist, und dass eine Schraube (37.2) mit ihrem Schraubenkopf an dem zweiten Stützfuß (47) des Bremsträgers (40), und eine andere Schraube (37.1) mit ihrem Schraubenkopf an dem zweiten Stützfuß (57) des weiteren Trägers (50) abgestützt ist.

## Claims

1. Brake arrangement for a utility vehicle, having an axle element (1) for mounting a wheel hub whose axis of rotation coincides with the longitudinal centre axis (A) of the axle element (1), and having a drum brake or disc brake comprising both axle-fixed elements and elements which can be rotated with the wheel hub, wherein a constituent part of the axle-fixed elements is a brake carrier (40, 60) which transmits the braking forces to the axle element (1) and which is mounted on a fastening portion (4) of the axle element (1), wherein the axle element (1), on the fastening portion (4), consists
- of a basic body (5) arranged on the longitudinal centre axis (A)
- and of first and second brackets (6, 7) which project outwardly from the basic body (5) on mutually opposed sides thereof,
wherein, to support the brake carrier (40, 60), each of the two brackets (6; 7) has formed thereon at least one fastening surface (6A, 6B; 7A, 7B) with a surface normal (N) tangential to the longitudinal centre axis (A) and parallel to the surface normal (N) of a fastening surface on the other bracket (7; 6), wherein each bracket (6, 7) is provided with at least one bore (26.1, 26.2; 27.1, 27.2) which opens in the fastening surface (6A, 6B; 7A, 7B) and whose axis extends at a right angle to the fastening surface, **characterized in that** the axle element (1), on the fastening portion (4), is designed as a forged body which comprises the basic body (5) and the brackets (6, 7) and on which the fastening surfaces (6A, 6B, 7A, 7B) and the bores (26.2, 26.2, 27.1, 27.2) are produced by machining operations following the forging process.

2. Brake arrangement according to Claim 1, **characterized in that** each bracket (6, 7) is provided with two of the bores (26.1 and 26.2; 27.1 and 27.2), wherein the two bores are arranged one behind the other in the longitudinal direction of the axle element (1).

3. Brake arrangement according to Claim 1 or 2, **characterized in that** the bores (26.1, 26.2, 27.1, 27.2) are cylindrical, threadless bores.

4. Brake arrangement according to one of the preceding claims, **characterized in that** each bracket (6, 7) has, on the side facing away from the fastening surface (6A, 7A), a second fastening surface (6B, 7B) parallel to the first fastening surface (6A, 7A) .

5. Brake arrangement according to Claim 4, **characterized in that** the surface normals (N) of the first fastening surfaces (6A, 7A) extend parallel to one another in a common direction, and **in that** the surface normals (N) of the second fastening surfaces (6B, 7B) extend parallel to one another in a common, opposite direction.

6. Brake arrangement according to Claim 5, **characterized in that** the first fastening surfaces (6A, 7A) and the second fastening surfaces (6B, 7B) each lie in a common plane, wherein the planes (U1, U2) are mutually parallel planes.

7. Brake arrangement according to one of Claims 4 to 6, **characterized in that** each bracket (6, 7) is provided with at least one bore (26.1, 26.2, 27.1, 27.2) which extends at a right angle between the first fastening surface (6A, 7A) and the second fastening surface (6B, 7B).

8. Brake arrangement according to Claim 7, **characterized in that** each bracket (6; 7) is provided with two bores (26.1, 26.2; 27.1, 27.2), wherein the two bores are arranged one behind the other in the longitudinal direction of the axle element (1).

9. Brake arrangement according to one of Claims 1 to 8, **characterized in that** the brake carrier (60) has formed thereon at least one pad slot (63) for receiving and for supporting the brake pad of a disc brake, and also a first support foot (66) and a second support foot (67), and **in that** the first support foot (66) is supported on the fastening surface (6A) of the first bracket (6), and the second support foot (67) is supported on the fastening surface (7A) of the second bracket (7).

10. Brake arrangement according to Claim 9, **characterized in that** the brake carrier (60) has a bridge portion (68) between the support feet (66, 67), and **in that** a radial clearance is situated between the inner side (69), which faces the axle element (1), of the bridge portion (68) and the outer side of the basic body (5).

11. Brake arrangement according to Claim 9 or 10, **characterized in that** the first support foot (66) is supported on the fastening surface (6A) of the first bracket (6) by means of first bolts (36.1, 36.2), and **in that** the second support foot (67) is supported on the fastening surface (7A) of the second bracket (7) by means of second bolts (37.1, 37.2), wherein the first bolts (36.1, 36.2) and the second bolts (37.1, 37.2) are in each case arranged behind one another in the longitudinal direction of the axle element (1).

12. Brake arrangement according to Claim 11, **characterized in that** all first and second bolts are arranged at the same distance from the longitudinal centre axis (A) of the axle element (1).

13. Brake arrangement according to one of Claims 1 to 8, **characterized in that** the brake carrier (40) has formed thereon one or two bearing pins (43) for pivotably supporting the two brake shoes of a drum brake, and also a first support foot (46) and a second support foot (47), and **in that** the first support foot (46) is supported on the fastening surface (6A) of the first bracket (6), and the second support foot (47) is supported on the fastening surface (7A) of the second bracket (7).

14. Brake arrangement according to Claim 13, **characterized in that** the brake carrier (40) has a bridge portion (48) between the support feet (46, 47), and **in that** a radial clearance is situated between the inner side (49), which faces the axle element (1), of the bridge portion (48) and the outer side of the basic body (5).

15. Brake arrangement according to Claim 13 or 14 in conjunction with Claim 4, **characterized by** a further carrier (50) having a first further support foot (56) and a second further support foot (57), wherein the first further support foot (56) is supported on the second fastening surface (6B) of the first bracket (6), and the second further support foot (57) is supported on the second fastening surface (7B) of the second bracket (7).

16. Brake arrangement according to Claim 15, **characterized in that** the further carrier (50) has a bridge portion (58) between the support feet (56, 57), and **in that** a radial clearance is situated between the inner side (59), which faces the axle element (1), of the bridge portion (58) and the outer side of the basic body (5).

17. Brake arrangement according to Claim 15 or 16, **characterized in that** the first support foot (46) and the first further support foot (56) are supported on the mutually opposed fastening surfaces (6A, 6B) of the first bracket (6) by means of bolts (36.1, 36.2) which are guided through bores (26.1, 26.2) in the first bracket (6), and **in that** the second support foot (47) and the second further support foot (57) are supported on the mutually opposed fastening surfaces (7A, 7B) of the second bracket (7) by means of bolts (37.1, 37.2) which are guided through bores (27.1, 27.2) in the second bracket (7).

18. Brake arrangement according to Claim 17, **characterized in that** one bolt (36.2) is supported by its bolt head on the first support foot (46) of the brake carrier (40), and another bolt (36.1) is supported by its bolt head on the first support foot (56) of the further carrier (50), and **in that** one bolt (37.2) is supported by its bolt head on the second support foot (47) of the brake carrier (40), and another bolt (37.1) is supported by its bolt head on the second support foot (57) of the further carrier (50).

## Revendications

1. Ensemble de freinage pour un véhicule utilitaire, comportant un élément d'essieu (1) servant à supporter un moyeu de roue dont l'axe de rotation coïncide avec l'axe médian longitudinal (A) de l'élément d'essieu (1), et comportant un frein à tambour ou à disque comprenant à la fois des éléments solidaires de l'essieu et des éléments pouvant tourner avec le moyeu de roue, un support de frein (40, 60) transmettant les forces de freinage à l'élément d'essieu (1) et monté sur une partie de fixation (4) de l'élément d'essieu (1) faisant partie des éléments solidaires de l'essieu, l'élément d'essieu (1), sur la partie de fixation (4), étant constitué
― d'un corps de base (5) disposé sur l'axe médian longitudinal (A)
― et de premières et deuxièmes consoles (6, 7), lesquelles font saillie vers l'extérieur à partir du corps de base (5) sur des côtés opposés de celui-ci,
au moins une surface de fixation (6A, 6B ; 7A, 7B) étant réalisée sur chacune des deux consoles (6 ; 7) pour l'appui du support de frein (40, 60), avec une normale à la surface (N) tangente à l'axe médian longitudinal (A) et parallèle à la normale (N) à une surface de fixation sur l'autre console (7 ; 6), chaque console (6, 7) étant pourvue d'au moins un alésage (26.1, 26.2 ; 27.1, 27.2) débouchant dans la surface de fixation (6A, 6B ; 7A, 7B), alésage dont l'axe s'étend perpendiculairement à la surface de fixation, **caractérisé en ce que** l'élément d'essieu (1), sur la partie de fixation (4), est réalisé sous la forme d'un corps forgé comportant le corps de base (5) et les consoles (6, 7), corps sur lequel les surfaces de fixation (6A, 6B, 7A, 7B) et les alésages (26.1, 26.2, 27.1, 27.2) sont produits par des usinages subséquents au processus de forgeage.

2. Ensemble de freinage selon la revendication 1, **caractérisé en ce que** chaque console (6, 7) est dotée de deux des alésages (26.1 et 26.2 ; 27.1 et 27.2), les deux alésages étant disposés l'un derrière l'autre dans la direction longitudinale de l'élément d'essieu (1).

3. Ensemble de freinage selon la revendication 1 ou 2, **caractérisé en ce que** les alésages (26.1, 26.2, 27.1, 27.2) sont des alésages cylindriques non filetés.

4. Ensemble de freinage selon l'une des revendications précédentes, **caractérisé en ce que** chaque console (6, 7) comprend, sur le côté opposé à la surface de fixation (6A, 7A), une deuxième surface de fixation (6B, 7B) parallèle à la première surface de fixation (6A, 7A).

5. Ensemble de freinage selon la revendication 4, **caractérisé en ce que** les normales (N) aux premières surfaces de fixation (6A, 7A) s'étendent parallèlement l'une à l'autre dans une direction commune, et **en ce que** les normales (N) aux deuxièmes surfaces de fixation (6B, 7B) s'étendent parallèlement l'une à l'autre dans une direction commune opposée.

6. Ensemble de freinage selon la revendication 5, **caractérisé en ce que** les premières surfaces de fixation (6A, 7A) et les deuxièmes surfaces de fixation (6B, 7B) sont situées respectivement dans un plan commun, les plans (E1, E2) étant des plans parallèles l'un à l'autre.

7. Ensemble de freinage selon l'une des revendications 4 à 6, **caractérisé en ce que** chaque console (6, 7) est dotée d'au moins un alésage (26.1, 26.2, 27.1, 27.2) s'étendant perpendiculairement entre la première (6A, 7A) et la deuxième (6B, 7B) surface de fixation.

8. Ensemble de freinage selon la revendication 7, **caractérisé en ce que** chaque console (6 ; 7) est dotée de deux alésages (26.1, 26.2 ; 27.1, 27.2), les deux alésages étant disposés l'un derrière l'autre dans la direction longitudinale de l'élément d'essieu (1).

9. Ensemble de freinage selon l'une des revendications 1 à 8, **caractérisé en ce qu'**au moins un logement de garniture (63) servant à la réception et à l'appui de la garniture d'un frein à disque ainsi qu'un premier (66) et un deuxième (67) pied d'appui sont réalisés sur le support de frein (60), et **en ce que** le premier pied d'appui (66) s'appuie contre la surface de fixation (6A) de la première console (6), et le deuxième pied d'appui (67) s'appuie contre la surface de fixation (7A) de la deuxième console (7).

10. Ensemble de freinage selon la revendication 9, **caractérisé en ce que** le support de frein (60) comprend une partie pont (68) entre les pieds d'appui (66, 67), et **en ce qu'**un espace libre radial se trouve entre le côté intérieur (69) de la partie pont (68) tourné vers l'élément d'essieu (1) et le côté extérieur du corps de base (5).

11. Ensemble de freinage selon la revendication 9 ou 10 ; **caractérisé en ce que** le premier pied d'appui (66) s'appuie au moyen de premières vis (36.1, 36.2) contre la surface de fixation (6A) de la première console (6), et **en ce que** le deuxième pied d'appui (67) s'appuie au moyen de deuxièmes vis (37.1, 37.2) contre la surface de fixation (7A) de la deuxième console (7), les premières vis (36.1, 36.2) et les deuxièmes vis (37.1, 37.2) étant disposées respectivement les unes derrière les autres dans la direction longitudinale de l'élément d'essieu (1).

12. Ensemble de freinage selon la revendication 11, **caractérisé en ce que** toutes les premières et deuxièmes vis sont disposées à la même distance de l'axe médian longitudinal (A) de l'élément d'essieu (1).

13. Ensemble de freinage selon l'une des revendications 1 à 8, **caractérisé en ce qu'**un ou deux tourillons de palier (43) servant à l'appui de manière pivotante des deux mâchoires d'un frein à tambour ainsi qu'un premier (46) et un deuxième (47) pied d'appui sont réalisés sur le support de frein (43), et **en ce que** le premier pied d'appui (46) s'appuie contre la surface de fixation (6A) de la première console (6), et le deuxième pied d'appui (47) s'appuie contre la surface de fixation (7A) de la deuxième console (7).

14. Ensemble de freinage selon la revendication 13, **caractérisé en ce que** le support de frein (40) comprend une partie pont (48) entre les pieds d'appui (46, 47), et **en ce qu'**un espace libre radial se trouve entre le côté intérieur (49) de la partie pont (48) tourné vers l'élément d'essieu (1) et le côté extérieur du corps de base (5).

15. Ensemble de freinage selon la revendication 13 ou 14, en association avec la revendication 4,
**caractérisé par** un autre support (50) doté d'un autre premier pied d'appui (56) et d'un autre deuxième pied d'appui (57), l'autre premier pied d'appui (56) s'appuyant contre la deuxième surface de fixation (6B) de la première console (6), et l'autre deuxième pied d'appui (57) s'appuyant contre la deuxième surface de fixation (7B) de la deuxième console (7).

16. Ensemble de freinage selon la revendication 15, **caractérisé en ce que** l'autre support (50) comprend une partie pont (58) entre les pieds d'appui (56, 57), et **en ce qu'**un espace libre radial se trouve entre le côté intérieur (59) de la partie pont (58) tourné vers l'élément d'essieu (1) et le côté extérieur du corps de base (5).

17. Ensemble de freinage selon la revendication 15 ou 16, **caractérisé en ce que** le premier pied d'appui (46) et l'autre premier pied d'appui (56) s'appuient contre les surfaces de fixation (6A, 6B) opposées l'une à l'autre de la première console (6) au moyen de vis (36.1, 36.2), lesquelles sont guidées à travers des alésages (26.1, 26.2) dans la première console (6), et **en ce que** le deuxième pied d'appui (47) et l'autre deuxième pied d'appui (57) s'appuient contre les surfaces de fixation (7A, 7B) opposées l'une à l'autre de la deuxième console (7) au moyen de vis (37.1, 37.2), lesquelles sont guidées à travers des alésages (27.1, 27.2) dans la deuxième console (7).

18. Ensemble de freinage selon la revendication 17, **caractérisé en ce qu'**une vis (36.2) s'appuie par sa tête de vis contre le premier pied d'appui (46) du support de frein (40), et une autre vis (36.1) s'appuie par sa tête de vis contre le premier pied d'appui (56) de l'autre support (50), et **en ce qu'**une vis (37.2) s'appuie par sa tête de vis contre le deuxième pied d'appui (47) du support de frein (40), et une autre vis (37.1) s'appuie par sa tête de vis contre le deuxième pied d'appui (57) de l'autre support (50).
